# EUROPEAN PATENT SPECIFICATION

(11) **EP 3 413 105 B1**
(45) Date of publication and mention of the grant of the patent: **08.09.2021**
(21) Application number: 17382345.1
(22) Date of filing: 07.06.2017
(51) Int. Cl.: G02B 6/00

(54) **LIGHTING DEVICE**
BELEUCHTUNGSVORRICHTUNG
DISPOSITIF D'ÉCLAIRAGE

(43) Date of publication of application: 12.12.2018
(73) Proprietor: Valeo Iluminacion, 23600 Martos (ES)
(72) Inventor: PASTOR, Ramon, 23600 Martos (ES); MARTINEZ, Juan Manuel, 23600 MARTOS (ES); BENDANA, Xesus, 23600 MARTOS (ES); SANCHO, Adrian, 23600 MARTOS (ES); DOMINGUEZ, Jose-Angel, 23600 MARTOS (ES); PUGA, Lucia, 23600 MARTOS (ES)

(56) References cited:
- EP-A1- 1 036 979
- EP-A1- 1 632 709
- EP-A2- 1 146 281
- EP-A2- 1 243 467
- DE-A1- 4 129 094
- DE-A1- 19 857 561
- FR-A1- 3 026 816

## Description

### TECHNICAL FIELD

The present invention relates to the field of lighting devices for vehicles, and more specifically, to lighting devices including light guides.

### STATE OF THE ART

As shown, for instance, in patent document DE 19857561 A1, a lighting device for a vehicle may include a light guide, to which a light source is coupled to at some light inlet surface. The light guide then transports light from the light inlet surface to some light outlet surface by means of total refraction of light at the boundary of the light guide with the surrounding medium. In the light guide shown in this document, a portion of the light guide comprises some prisms for reflecting rays of light towards the light outlet surface.

These light guides may have different shapes and sizes depending on their actual application and location. In the specific case of the rear lights of a vehicle, it may occur that the rear lights comprise a light in the main body of the vehicle, and then another rear light in the back door or in the boot of the vehicle. This may provoke a non-desirable visual gap when viewing the vehicle from behind the vehicle, since a non-lighted portion may be appreciated between the main body light and the back-door light.

Additionally, depending on the car's shape and its curvature, the rear lights may require use of a curved light guide. Depending on the degree of curvature of the light guide, some of the light beams emitted by the light source will be refracted and not reflected, thereby resulting in loss of light emission and there being differences in brightness over the length of the light guide.

In order to solve this problem, two light sources located at separate ends may be used to light the light guide, such as shown in patent document US 9316373 B1. However, this solution is cost sensitive (separate PCBs are needed), and it is sometimes not feasible due to the space available in the lighting device. In fact, due to the space requirements and geometrical limitations, the light source sometimes has to be located at an end of the light guide which is the opposite end to the end of the light guide which is optimal for light emission.

Document EP 1 146 281 A2 discloses a lighting device according to the preamble of claim 1.

Therefore, there is a need for a lighting device having improved lighting efficiency which meets the above space and geometrical requirements.

### DESCRIPTION OF THE INVENTION

The present invention solves the above problem by providing a lighting device that comprises:
- at least one light guide;
- a light source coupled to a light inlet surface of the at least one light guide; the lighting device further comprising a reflecting element for reflecting light beams emitted by the light source, the reflecting element being located at an end of the at least one light guide opposite the light inlet surface.

The lighting device as defined in the foregoing, which comprises a reflecting element located at an end of the at least one light guide which is opposite to the light inlet, is capable of improving the number of light beams outcoupled from the light guide in the desired direction, since the reflecting element is able to reflect light beams emitted by the light source which would otherwise be outcoupled from the light guide. The reflecting element is thus configured to reflect lights beams emitted by the light source and to provide them with an optimal direction for their outcoupling. This configuration allows for outcoupling light even if the light source is located at an end of the light guide which is the opposite end to the end of the light guide which is optimal for light emission.

Advantageously, the end of the at least one light guide at which the reflecting element is located need not be provided with any special geometry (such as cubes with a very precise configuration) for reflecting light beams; this end of the at least one light guide may be made flat, thereby reducing its manufacturing cost.

In some embodiments the at least one light guide is not a straight line, but curved or bent or formed by several straight or curved sections. This is advantageous for lighting devices having space or geometric limitations, since such a curved light guide may adapt to the specific shape of the lighting device.

According to the invention, the at least one light guide is configured for emitting light mainly in a first direction through a light outlet surface of the light guide, the light outlet surface being disposed at least partially at an angle of more than 90º with respect to the first direction. A light guide having this specific layout may be suitable for certain lighting devices which have space or geometric limitations, wherein the light guide cannot be disposed following a straight line.

In some particular embodiments the angle formed by the light outlet surface of the at least one light guide and the first direction is more than 110º, preferably more than 115º. The reflecting element helps to overcome the fact that the at least one guide light is curved by reflecting the light beams emitted by the surface so that light beams are outcoupled at more than 112°.

According to the invention, the at least one light guide has at least one surface comprised of a plurality of prisms, at least a first portion of the plurality of prisms (typically one of the surfaces of each prism) is configured for reflecting light beams coming from the reflecting element, and to reflect them towards the first direction. This way, the light beams reflected by the reflecting element are reflected by that portion of the prisms towards the first direction.

In some embodiments, a reflecting surface of the reflecting element is flat and/or substantially orthogonal to a longitudinal direction or an optical direction of the light guide at such end. This way, the highest number of light beams is reflected back inside the light guide.

To avoid Fresnel loss, the reflecting surface of the reflecting element is preferably located at a distance of 1 mm, preferably 0.5 mm or less to the end of the at least one light guide.

According to the invention, the lighting device further comprises a light guide support having a reflective surface for reflecting light beams coming from the light source. This way, any light beams emitted by the light source and which may have been refracted by the light guide are recovered and the support reflects them back to the light guide, so that they are outcoupled at the light outlet surface. A higher lighting efficiency is thus achieved. For even increasing this lighting efficiency, in some embodiments the light guide support is located in front of a surface of the light guide opposite the light outlet surface. Further, according to the invention, at least a second portion of the plurality of prisms (typically another surface of each prism) is configured for refracting light beams coming from the light source. This way, this second portion of the prisms refracts light beams coming from the light source which would otherwise be lost; by refracting them they reach the reflective surface of the light guide support where they are reflected, thereby further increasing the lighting efficiency.

In some embodiments the lighting device comprises two light guides, preferably curved light guides, and two reflecting elements, each reflecting element being located at an end of a respective light guide which is opposite the light source to which the light guides are coupled to). Having two curved light guides with respective reflecting elements (which may be coupled to separate light sources or to a same single light source), provides improved outcoupled light even if in case of space or geometrical limitations of the lighting device.

The light source may be any of an LED, an incandescent lamp or a halogen lamp.

In some embodiments the lighting device is a vehicle lighting device, and the first direction coincides with a front-to-rear direction of the vehicle. More specifically, the lighting device can be a lighting device for a boot of a vehicle. By using the lighting device of the present invention as lighting device in the boot of the vehicle, there is no need to include an additional light source in the movable part of the vehicle (the back door or the boot), so the visual gap between the main body of the vehicle and the back door is reduced.

The different aspects and embodiments of the invention defined in the foregoing can be combined with one another, as long as they are compatible with each other.

Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a top view of part of a lighting device according to a preferred embodiment of the invention, the lighting device comprising a curved light guide.
Figure 2 shows a front view of the lighting device of Fig. 1.
Figure 3 shows an enlarged view of one end of the light guide.
Figure 4 shows an enlarged view of another portion of the light guide.

### DETAILED DESCRIPTION OF THE INVENTION

The following description is not to be taken in a limiting sense but is given solely for the purpose of describing the broad principles of the invention. Next embodiments of the invention will be described by way of example, with reference to the above-mentioned drawings.

The present invention is applicable to lighting devices in the field of automotive technology, for lighting and/or signalling; more specifically, the invention is applicable to lighting devices for the rear part of a vehicle.

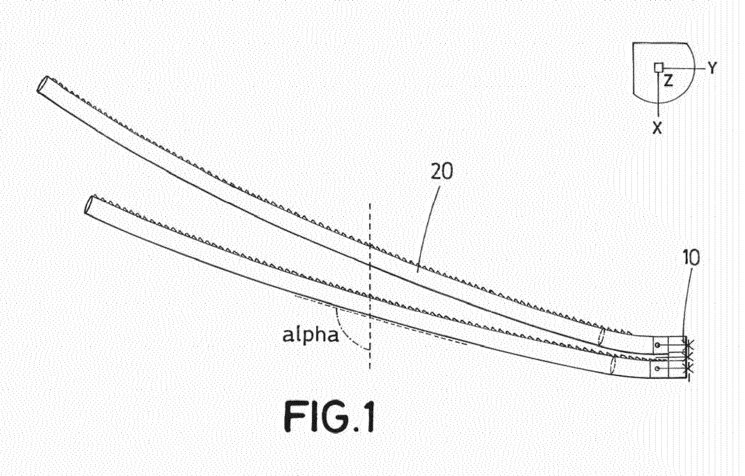

In the embodiment shown in Figure 1, the lighting device comprises two light sources 10 and two light guides 20. The light guides 20 are curved, following the curved geometry of a rear light of a vehicle.

The light sources 10 emit light beams A mainly in a direction Y, and it is desirable that the most light possible is reflected and directed towards another direction X to be outcoupled through a light outlet surface 25 of the light guides 20.

The direction X is a front-to-rear direction of the vehicle; the direction Y, orthogonal to the direction X, is a left-to-right direction of the vehicle.

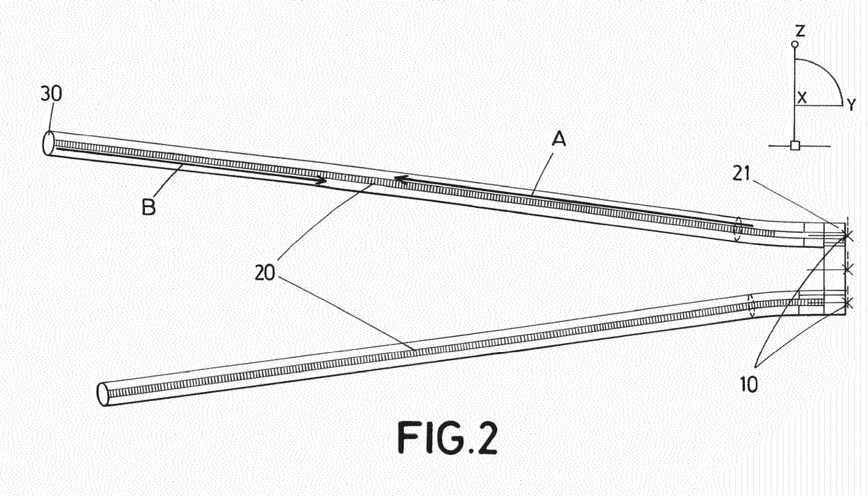

As shown in Figures 1 and 2, the light guides 20 are curved in XY plane, extending inwardly from a light inlet surface 21 to which each light source 10 is coupled towards the front part of the car, that is in the -X direction. In a plane orthogonal to the XY plane, the light guides 20 extend substantially straight.

The light guides 20 are curved, and as shown in Figure 1, they may be differently curved. But in both cases the light outlet surface 25 of the light guides 20 has a curvature, at at least a portion of their extension, which forms an angle of more than 112º.

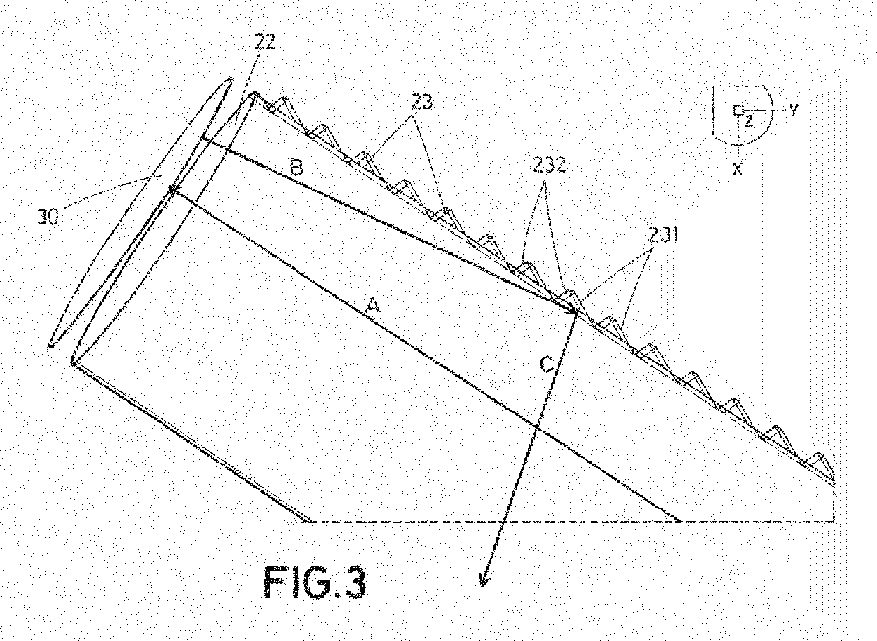

As more clearly shown in Figure 3, the lighting device further includes a mirror 30 located at an end 22 of the light guide which is opposite the light inlet surface 21. The mirror 30 has a reflecting surface which is essentially oriented at right angles with the longitudinal or optical direction of the light guide 20 at that end 22. This way, light beams A emitted by the light source 10 that reach the mirror 30 are reflected back into the light guide 20 as reflected light beams B.

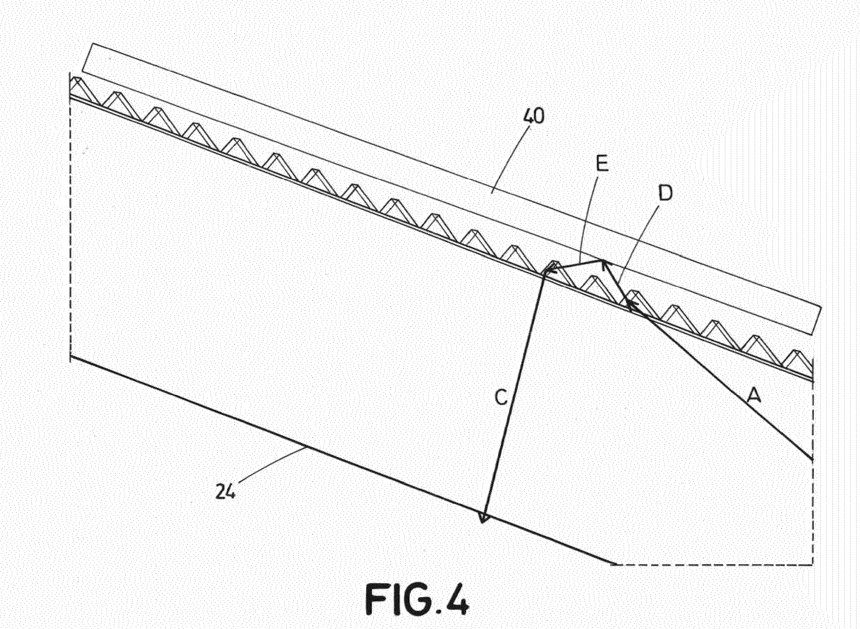

As shown in more detail in Figures 4 and 5, the light guides 20 comprise several prisms 23. The prisms 23 have a first surface 231 and a second surface 232 which are designed and oriented as if the light source was located where the mirror is, which is the optimal situation in view of the light guides 20 being curved towards the -X direction.

The first surface 231 of each prism 23 is oriented for reflecting light beams B coming from the reflecting element 30, and to reflect them towards the direction X to outcouple the light beams C out of the light guide 20 through the light outlet surface 24.

The second surface 232 of each prism 23 is oriented for refracting light beams light beams A coming from the light source 10 (cf. Figure 4) and having an incident angle below a critical angle ε, with ε=arcsin n1/n2, n1 and n2 being the refractive index of the air and the light guide (n2>n1). For outcoupling these refracted beams towards the desirable X direction, the lighting device also includes a light guide support 40, having at least a reflective surface. This reflective surface reflecting the refracted light beams D, the reflected light beams E impacting on the second surface 232 of the prisms with an incident angle above the critical angle ε, which are totally reflected inside the light guide 20 as light beams C towards the main direction X.

In the embodiment now presented, the prisms 23 have a first surface 231 and a second surface 232, which is advantageous from a manufacturing point of view. Nevertheless, the prisms may comprise further surface for reflecting light beams, if the shape and configuration light guide 20 requires so.

As shown in the foregoing, the lighting device of the present invention provides is more efficient from a lighting point of view, light beams travelling both in the Y and -Y directions are outcoupled in the main direction X.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A lighting device comprising:
- at least one light guide (20);
- a light source (10) coupled to a light inlet surface (21) of the at least one light guide (20);
the lighting device further comprising a reflecting element (30) for reflecting light beams (a) emitted by the light source (10), the reflecting element (30) being located at an end (22) of the at least one light guide (20) opposite the light inlet surface (21) wherein:
- the at least one light guide (20) is configured for emitting light beams (C) mainly in a first direction (X) through a light outlet surface (24) of the at least one light guide (20), the light outlet surface being disposed at least partially at an angle (alpha) of more than 90º with respect to the first direction (X);
- the light guide has at least one surface comprised of a plurality of prisms (23), at least a first portion (231) of the plurality of prisms (23) being configured for reflecting light beams (B) coming from the reflecting element (30), and to reflect them towards the first direction (X);
- at least a second portion (232) of the plurality of prisms (23) is configured for refracting light beams coming from the light source (10);
**characterized in that**
- the lighting device further comprises a light guide support (40) having a reflective surface for reflecting light beams (A) coming from the light source (10).

2. The lighting device of claim 1, wherein the angle is more than 115º.

3. A lighting device according to any of claim 1 and claim 2, wherein the at least one light guide (20) is curved.

4. A lighting device according to any of claims 1-3, wherein a reflecting surface of the reflecting element (30) is substantially orthogonal to a longitudinal direction of the at least one light guide (20) at such end (22).

5. A lighting device according to any of claims 1-4, the light guide support (40) being positioned facing a surface of the at least one light guide (20) which is opposite the light outlet surface (24).

6. A lighting device according to any of claims 1-5, wherein the light source (10) is any of an LED, an incandescent lamp or a halogen lamp.

7. A lighting device according to any of claims 1-6, the lighting device being a vehicle lighting device and wherein the first direction (X) coincides with a front-to-rear direction of the vehicle.

8. A lighting device according to any of claims 1-6, wherein the lighting device is a lighting device for a boot of a vehicle.

## Patentansprüche

1. Beleuchtungsvorrichtung, die Folgendes umfasst:
- mindestens einen Lichtleiter (20);
- eine Lichtquelle (10), die an eine Lichteintrittsfläche (21) des mindestens einen Lichtleiters (20) gekoppelt ist;
wobei die Beleuchtungsvorrichtung ferner ein Reflexionselement (30) zum Reflektieren von Lichtstrahlen (a), die von der Lichtquelle (10) emittiert werden, umfasst, wobei sich das Reflexionselement (30) an einem Ende (22) des mindestens einen Lichtleiters (20) gegenüber der Lichteintrittsfläche (21) befindet, wobei:
- der mindestens eine Lichtleiter (20) zum Emittieren von Lichtstrahlen (C) hauptsächlich in eine erste Richtung (X) durch eine Lichtaustrittsfläche (24) des mindestens einen Lichtleiters (20) ausgelegt ist, wobei die Lichtaustrittsfläche mit Bezug auf die erste Richtung (X) mindestens teilweise in einem Winkel (alpha) von mehr als 90° angeordnet ist;
- der Lichtleiter mindestens eine Fläche aufweist, die aus einer Vielzahl von Prismen (23) besteht, wobei mindestens ein erster Abschnitt (231) der Vielzahl von Prismen (23) zum Reflektieren von Lichtstrahlen (B), die vom Reflexionselement (30) kommen, und dazu, sie zur ersten Richtung (X) zu reflektieren, ausgelegt ist;
- mindestens ein zweiter Abschnitt (232) der Vielzahl von Prismen (23) zum Brechen von Lichtstrahlen, die von der Lichtquelle (10) kommen, ausgelegt ist;
**dadurch gekennzeichnet, dass**
- die Beleuchtungsvorrichtung ferner eine Lichtleiterstütze (40) mit einer Reflexionsfläche zum Reflektieren von Lichtstrahlen (A), die von der Lichtquelle (10) kommen, umfasst.

2. Beleuchtungsvorrichtung nach Anspruch 1, wobei der Winkel mehr als 115° beträgt.

3. Beleuchtungsvorrichtung nach einem der Ansprüche 1 und 2, wobei der mindestens einen Lichtleiter (20) gekrümmt ist.

4. Beleuchtungsvorrichtung nach einem der Ansprüche 1-3, wobei eine reflektierende Fläche des Reflexionselements (30) an dem Ende (22) im Wesentlichen orthogonal zu einer Längsrichtung des mindestens einen Lichtleiters (20) verläuft.

5. Beleuchtungsvorrichtung nach einem der Ansprüche 1-4, wobei die Lichtleiterstütze (40) derart positioniert ist, dass sie einer Fläche des mindestens einen Lichtleiters (20), die der Lichtaustrittsfläche (24) gegenüberliegt, zugewandt ist.

6. Beleuchtungsvorrichtung nach einem der Ansprüche 1-5, wobei die Lichtquelle (10) eines von einer LED, einer Glühlampe oder einer Halogenlampe ist.

7. Beleuchtungsvorrichtung nach einem der Ansprüche 1-6, wobei die Beleuchtungsvorrichtung eine Fahrzeugbeleuchtungsvorrichtung ist und wobei die erste Richtung (X) mit einer Vorn-Hinten-Richtung des Fahrzeugs zusammenfällt.

8. Beleuchtungsvorrichtung nach einem der Ansprüche 1-6, wobei die Beleuchtungsvorrichtung eine Beleuchtungsvorrichtung für einen Kofferraum eines Fahrzeugs ist.

## Revendications

1. Dispositif d'éclairage comprenant :
- au moins un guide de lumière (20) ;
- une source de lumière (10) couplée à une surface d'entrée de lumière (21) du au moins un guide de lumière (20) ;
le dispositif d'éclairage comprenant en outre un élément réfléchissant (30) pour réfléchir les faisceaux lumineux (a) émis par la source de lumière (10), l'élément réfléchissant (30) étant situé à une extrémité (22) du au moins un guide de lumière (20) opposée à la surface d'entrée de lumière (21)
dans lequel :
l'au moins un guide de lumière (20) est configuré pour émettre des faisceaux lumineux (C) principalement dans une première direction (X) à travers une surface de sortie de lumière (24) du au moins un guide de lumière (20), la surface de sortie de lumière étant disposée au moins partiellement à un angle (alpha) de plus de 90° par rapport à la première direction (X) ;
le guide de lumière a au moins une surface composée d'une pluralité de prismes (23), au moins une première partie (231) de la pluralité de prismes (23) étant configurée pour réfléchir les faisceaux lumineux (B) provenant de l'élément réfléchissant (30), et pour les réfléchir vers la première direction (X) ;
au moins une deuxième partie (232) de la pluralité de prismes (23) est configurée pour réfracter les faisceaux lumineux provenant de la source de lumière (10) ;
**caractérisé en ce que**
le dispositif d'éclairage comprend en outre un support de guide de lumière (40) ayant une surface réfléchissante pour réfléchir les faisceaux lumineux (A) provenant de la source de lumière (10).

2. Dispositif d'éclairage selon la revendication 1, dans lequel l'angle est supérieur à 115°.

3. Dispositif d'éclairage selon l'une quelconque des revendications 1 et 2, dans lequel le au moins un guide de lumière (20) est incurvé.

4. Dispositif d'éclairage selon l'une quelconque des revendications 1 à 3, dans lequel une surface réfléchissante de l'élément réfléchissant (30) est sensiblement orthogonale à une direction longitudinale du au moins un guide de lumière (20) à une telle extrémité (22).

5. Dispositif d'éclairage selon l'une quelconque des revendications 1 à 4, le support de guide de lumière (40) étant positionné en regard d'une surface du au moins un guide de lumière (20) qui est opposée à la surface de sortie de lumière (24).

6. Dispositif d'éclairage selon l'une quelconque des revendications 1-5, dans lequel la source de lumière (10) est l'une quelconque d'une LED, d'une lampe à incandescence ou d'une lampe halogène.

7. Dispositif d'éclairage selon l'une quelconque des revendications 1-6, le dispositif d'éclairage étant un dispositif d'éclairage de véhicule et dans lequel la première direction (X) coïncide avec une direction avant-arrière du véhicule.

8. Dispositif d'éclairage selon l'une quelconque des revendications 1 à 6, dans lequel le dispositif d'éclairage est un dispositif d'éclairage d'un coffre de véhicule.
